# EUROPEAN PATENT APPLICATION

(11) **EP 4 838 083 A1**
(43) Date of publication of application: **11.11.2026**
(21) Application number: 26176932.7
(22) Date of filing: 06.05.2026
(51) Int. Cl.: F03B 13/00, B63B 35/32, C02F 103/00, C02F 103/08

(54) **NAUTICAL APPARATUS FOR COLLECTING MICROPLASTICS AND GENERATING ENERGY**

(30) Priority: 07.05.2025 IT 202500010269
(71) Applicant: Marchetti, Massimiliano, 63074 San Benedetto del Tronto (AP) (IT)
(72) Inventor: Marchetti, Massimiliano, 63074 San Benedetto del Tronto (AP) (IT)
(74) Representative: Ripamonti, Enrico

(57) **Abstract**

An apparatus (10, 10') for collecting microplastics and generating energy for watercraft (12) comprising a suction duct (14, 40) having an inlet compartment (16, 42) for suction of seawater, a filtration system adapted to selectively remove microplastics from the suctioned seawater, a turbine (26, 46) placed in communication with the suction duct (14, 40) and driven by the suctioned seawater, an energy generation circuit (28, 48) connected to the turbine (26, 46) and adapted to convert the mechanical energy of the turbine into electrical energy, an outlet mouth (25, 50) for the seawater filtered and/or used to drive the turbine.

## Description

The present invention relates to a nautical apparatus for collecting microplastics and for generating energy.

More particularly, the present invention relates to an apparatus for collecting microplastics from marine waters, for installation on watercraft and for the simultaneous generation of energy.

As is known, pollution from microplastics in seas and oceans is an issue that has gained relevance both at public and institutional level in recent years, with serious implications for the health of animals and people.

Plastic, a material widely used for its versatility and convenience, represents a problem when it is not disposed of correctly; indeed, instead of decomposing, it fragments into microscopic particles, namely microplastics, which persist in the environment for prolonged periods.

Microplastics are composed of polymers and additives and may contain impurities deriving from production.

They are formed both from the fragmentation of larger plastic objects and from the intentional addition of microplastics in products such as exfoliating cosmetics and the like.

Two main types of microplastics are distinguished: primary microplastics, released directly into the environment (for example, from fibres of synthetic fabrics or from tyre wear) and secondary microplastics, deriving from the degradation of larger plastic objects.

The most common plastics found in seas include PET, polyamide and polycarbonates, materials used in disposable bottles and containers.

Unfortunately, a significant part of plastic is not disposed of adequately, even in countries with strong environmental awareness, ultimately degrading into microplastics in seas.

These microplastics enter the food chain, representing a potential risk to human health.

The amount of microplastics in the oceans is increasing, with estimates reaching tens of thousands of billions of particles. Once ingested by marine animals, microplastics may enter the human food chain, with effects on health still under study.

The presence of toxic chemical additives in microplastics adds further concern regarding potential damage to marine fauna and to humans.

Consequently, the growing concern for the environment and for the health of animals and human beings has led several Member States to adopt or propose, at national level, bans on the intentional use of microplastics in specific consumer products.

Examples include the limitation of microbeads in rinse-off cosmetics, where the microplastic particles act as abrasives and exfoliants, and the restriction of single-use plastic products such as plates and cups.

It is expected that the harmonisation of regulations at global level and the manifestation of the positive effects of these measures will require a considerable period.

In the meantime, the removal of microplastics from marine environments remains a priority and various initiatives have been undertaken to develop solutions in this respect.

For example, patent WO2019166442 describes a method for removing microplastics from seawater which employs compounds such as alkyltrichlorosilanes and/or silsesquioxanes.

However, such solution has significant drawbacks linked to the fact that such compounds, if not managed or used correctly, could represent a further source of chemical pollution, running counter to the objective of reducing pollution.

Other known solutions are represented by mechanical filtration carried out using nets, filters and sieves to retain microplastics.

However, this solution has drawbacks linked to limited effectiveness for smaller microplastics, to a risk of clogging of the filters and to an impact on marine fauna (fish, crustaceans) which are captured by the nets.

Another known solution is represented by flotation, which uses systems that exploit the different density of microplastics in order to separate them from water.

However, this solution also has drawbacks linked to variable effectiveness depending on the type of plastic, to a need for chemical substances (flocculants) which may be harmful to the environment and, above all, to very high costs.

Another known solution is represented by hydrocyclonic cyclones which exploit centrifugal force to separate microplastics from water.

This solution has drawbacks linked to high energy consumption and to limited effectiveness for very small microplastics.

Another known solution is represented by manual collection of microplastics from beaches and from the surface of the water using boats or nets.

However, this solution also has drawbacks linked to the fact that it is a method that is very expensive in terms of time and resources, that has limited effectiveness, especially in open sea, and that does not solve the problem of microplastics present in the water column.

More generally, the known solutions have drawbacks linked to the fact that they are effective only for larger microplastics, whereas smaller ones (nanoplastics) are difficult to remove, to the fact that many methods have a negative impact on the environment, for example due to the use of chemical substances or high energy consumption, to the high costs of implementation and maintenance of the removal technologies, to the difficulty of removing microplastics, especially in open sea, where their concentration is lower and their dispersion is higher, and to the impact on marine fauna which is captured by the collection instruments.

An example of a known embodiment, with the drawbacks highlighted above, is described in CN110329463, which refers to a device for collecting microplastics in a marine environment comprising a series of ducts with mechanical filters for coarse and fine particles, as well as fluid-dynamic elements adapted to improve the flow and filtration efficiency, such device being associable with propeller propulsion means for movement and energy generation; such solution does not provide for a functional integration between suction, selective filtration and energy generation.

The purpose of the present invention is to overcome the drawbacks described above.

More particularly, the purpose of the present invention is to provide a nautical apparatus for collecting microplastics installed on board watercraft and vessels in general.

A further purpose of the present invention is to provide a nautical apparatus for collecting microplastics which, at the same time, also allows generation of energy.

A further purpose of the present invention is to provide a nautical apparatus which ensures environmental sustainability by minimising the impact on the marine ecosystem, avoiding the use of harmful chemical substances and reducing energy consumption.

A further purpose of the present invention is to provide a nautical apparatus which is efficient and adaptable to different environmental conditions.

A further purpose of the present invention is to provide a nautical apparatus which is easy and simple to install on both new and already existing vessels.

A further purpose of the present invention is to provide a nautical apparatus which is economically sustainable for large-scale implementation.

A further purpose of the present invention is to make available to users a nautical apparatus adapted to ensure high reliability and durability over time and such, furthermore, as to be capable of being easily and economically produced.

These and other purposes are achieved by the invention, which has the features set forth in claim 1.

According to the invention, an apparatus for collecting microplastics and generating energy for watercraft is provided, comprising a suction duct having an inlet compartment for suction of seawater, a filtration system adapted to selectively remove microplastics from the suctioned seawater, a turbine placed in communication with the suction duct and driven by the suctioned seawater, an energy generation circuit connected to the turbine and adapted to convert the mechanical energy of the turbine into electrical energy, an outlet mouth for the seawater filtered and/or used to drive the turbine.

Advantageous embodiments of the invention appear from the dependent claims.

The constructional and functional features of the nautical apparatus for collecting microplastics and for generating energy of the present invention will be better understood from the detailed description that follows, in which reference will be made to the accompanying drawing tables, which illustrate embodiments thereof given only by way of non-limiting example and in which:
FIG. 1 schematically illustrates the nautical apparatus for collecting microplastics and for generating energy of the present invention according to a first embodiment;
FIG. 2 schematically illustrates a detail of the apparatus of FIG. 1;
FIG. 3 schematically illustrates an alternative embodiment of the apparatus of the invention.

With reference to the cited figures, the nautical apparatus for collecting microplastics and generating energy of the present invention, indicated overall with 10 in the cited figures, is installed in a watercraft or vessel 12 and comprises a suction duct 14 connected to the bottom of the hull of the vessel and to a tank 18 which, in turn, communicates with the outside of the vessel by means of a discharge duct 20 and a transit duct 22 connected with the first duct 14 and in communication with the outside of the vessel.

The suction duct 14 comprises an inlet compartment 16 openable/closable by means of a gate valve 15 (or sea intake valve) or the like, which places said duct in communication with the seawater for a function of suction of seawater into said suction duct 14; said inlet compartment 16 is positioned in the direction of the bow of the vessel and towards the centre of the vessel itself, where there is greater weight (substantially at the engine) and, therefore, where there is greater water pressure.

The suction duct 14 is in fluid communication with the tank 18, which is preferably installed above the waterline of the vessel.

Said tank 18 comprises a battery of filters or filtering membranes 18' configured for selective removal of microplastics from seawater.

Said battery of filters or filtering membranes 18' comprises:
- a pre-filtration section, for example, provided with mesh or cartridge filters, for removal of macroplastics and coarse particulate;
- a main filtration section, for example, comprising a sequence of ultrafiltration (UF), nanofiltration (NF) and/or reverse osmosis (RO) membranes or fibre filters, for removal of microplastics of decreasing dimensions;
- a post-filtration section, for example, provided with activated carbon filters, for removal of residual organic contaminants.

Said filters are periodically replaced for cleaning from the non-filtered material and, also, in correspondence with each section of the tank 18 comprised between the cited filters, settling tanks may be arranged, in which the non-filtered material accumulates.

At the inlet of the tank 18 and upstream of the battery of filters or filtering membranes 18' a plastic-shredding device may be installed, configured to prevent the occurrence of unfortunate clogging.

According to an alternative embodiment, such plastic-shredding device may be arranged internally to the suction duct 14 in correspondence with the gate valve 15 (or sea inlet).

The filtered seawater is discharged from the tank 18 through the discharge duct 20.

A by-pass element 24, defined by a conveying net with the function of allowing the passage of only seawater inside said transit duct 22, places the suction duct 14 in communication with the transit duct 22, which ends with an outlet mouth 25 positioned above the waterline of the vessel 12.

The apparatus of the invention may comprise an impeller (different from the one already present and used for pumping water functional for cooling the engine of the vessel) arranged in the suction duct 14, activatable even with the engine stopped (for example, by means of a battery or by solar energy), and defining a suction pump for collecting water and floating debris of the microplastics, light plastics and similar type even when the vessel is stationary.

Said impeller may comprise a centrifugal or diaphragm pump, a collector filter and variable-mesh grilles and should be arranged below the waterline of the watercraft in correspondence, for example, with the tank 18.

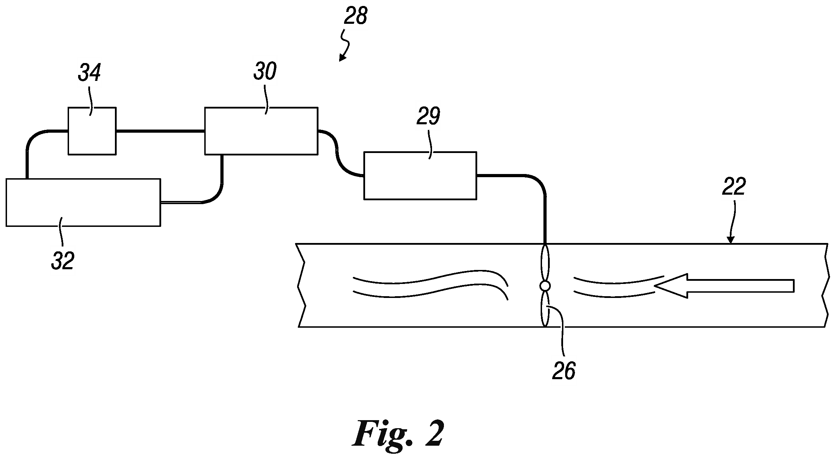

Inside the transit duct 22, as better schematised in the detail of FIG. 2, a turbine 26 is housed, the rotation axis of which is coaxial with the longitudinal axis of the transit duct 22. The turbine 26 is made of lightweight and corrosion-resistant materials, such as titanium alloys or composite materials.

The turbine 26 is connected to an electrical energy generation circuit 28, comprising a relay 29, a battery charger 30, a battery 32 and a switch 34.

The electrical energy generated by the circuit 28 may be used to power the on-board systems of the vessel or watercraft, reducing fuel consumption and environmental impact.

Also, the circuit 28 may be integrated with the electric propulsion system of the vessel for a hybrid or fully electric propulsion system.

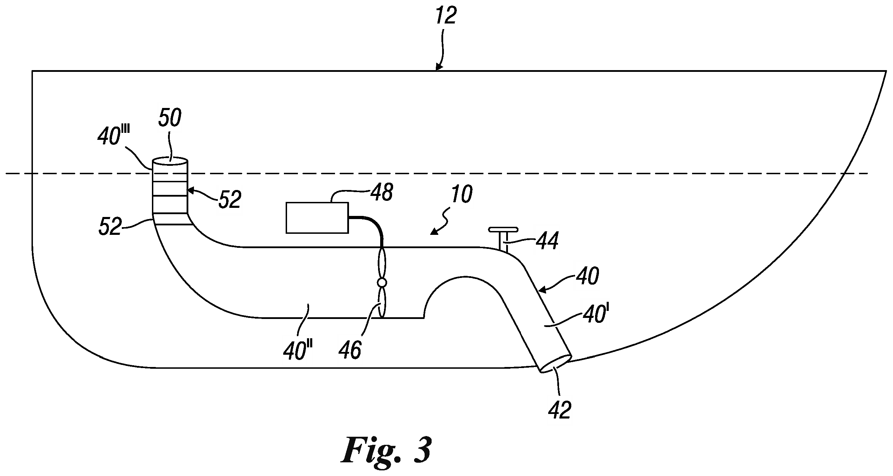

With reference to FIG. 3, the apparatus of the invention is illustrated according to an alternative embodiment indicated overall with 10'.

The apparatus 10' comprises a suction duct 40 which extends to define a first portion 40', a second portion 40'' and a third portion 40‴.

The first portion 40' is provided with an inlet compartment 42 openable/closable by means of a gate valve 44 (or sea inlet) or the like, which places said duct in communication with seawater for a function of suction of seawater into said suction duct 40.

The second portion 40'', which extends starting from said first portion 40', houses therein a turbine 46, the rotation axis of which is coaxial with the longitudinal axis of said second portion 40'' of the suction duct 40.

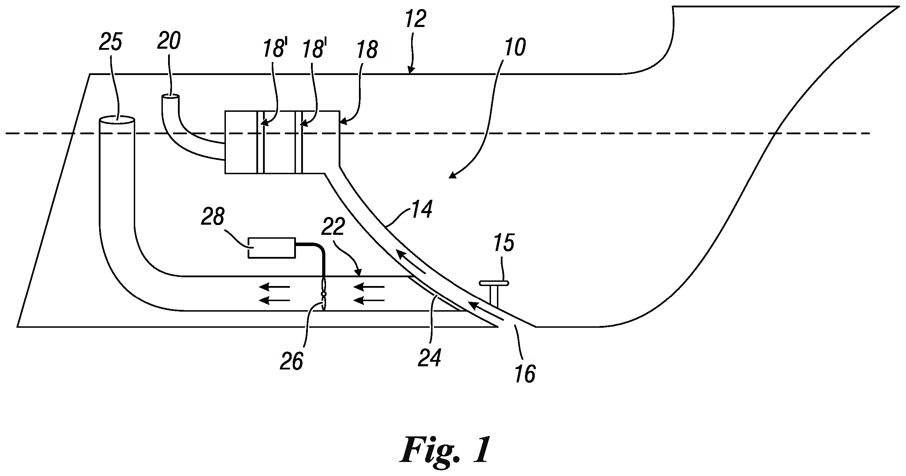

The turbine 46 is connected to an energy generation circuit 48 with the same features as the energy generation circuit 28 described with reference to the embodiment of FIGG. 1 and 2.

The third portion 40‴, which extends starting from the second portion 40", communicates with the outside of the vessel by means of an outlet mouth or compartment 50 and, therein, houses a battery of filters or filtering membranes 52 configured for selective removal of microplastics from seawater (said battery of filters or filtering membranes has the same features as the battery of filters described with reference to the embodiment of FIG. 1 and, therefore, will not be the subject of further description).

The apparatus of the invention, with reference to this embodiment, may comprise an impeller (different from the engine cooling impeller of the vessel) arranged in the suction duct 40, activatable even with the engine stopped (for example, by means of a battery or by solar energy), defining a suction pump for collecting water and floating debris of the microplastics, light plastics and similar type (as described previously).

As described previously with reference to FIG. 1, the filters or filtering membranes are periodically replaced for cleaning from the non-filtered material and, also, in correspondence with each section of the third portion 40‴ in which the cited filters are arranged, settling tanks may be arranged, in which the non-filtered material accumulates.

Furthermore, at the inlet of the third portion 40''' and upstream of the battery of filters or filtering membranes, a plastic-shredding device may be installed, functional to prevent the occurrence of unfortunate clogging.

According to an alternative embodiment, such plastic-shredding device may be arranged internally to the first portion 40' of the suction duct 40 in correspondence with the gate valve 44 (or sea inlet).

According to alternative embodiments, the device of the invention may comprise the integration of water quality sensors in the tank 18 for the purpose of monitoring the effectiveness of the filtration process and detecting any anomalies and, also, pressure and flow sensors may be integrated in order to monitor operation of the impeller and of the turbine, optimising the performance of the system.

As can be noted from the foregoing, the advantages achieved by the nautical apparatus for collecting microplastics and for generating energy of the present invention are evident.

The nautical apparatus for collecting microplastics and for generating energy advantageously allows the collection of microplastics from seawater to be exploited in combination with the generation of electrical energy by exploiting the flow of the seawater itself.

A further advantage of the apparatus of the invention is represented by the fact of actively contributing to the reduction of pollution from microplastics in seas and oceans. A further advantage of the apparatus of the invention is represented by the selective filtration, which, thanks to the battery of filters, allows microplastics of different dimensions to be removed, reducing the negative impact on marine fauna and on the ecosystem, avoiding the use of harmful chemical substances and reducing energy consumption.

A further advantage of the apparatus of the invention is represented by the fact that the turbine and the energy generation circuit exploit the kinetic energy of seawater, a renewable and clean source and, consequently, dependence on fossil fuels is reduced, decreasing greenhouse gas emissions and environmental impact and, furthermore, economic savings are also obtained.

A further advantage of the apparatus of the invention is represented by the fact that it can operate autonomously during navigation, without requiring constant manual interventions. A further advantage of the apparatus of the invention is represented by the fact that the integrated sensors and control systems optimise operation and prevent any anomalies.

A further advantage of the apparatus of the invention is represented by the fact that it can be adapted to different types of watercrafts, from small recreational boats to large commercial ships and, furthermore, it can be easily configured based on specific needs.

Although the invention has been described above with particular reference to its embodiments given only by way of non-limiting example, numerous modifications and variants will be evident to a person skilled in the art in light of the description set forth above. The present invention, therefore, is intended to embrace all modifications and variants falling within the scope of the claims that follow.

## Claims

1. An apparatus (10, 10') for collecting microplastics and generating energy for watercraft (12), **characterized in that** it comprises a suction duct (14, 40) having an inlet compartment (16, 42) for suction of seawater, a filtration system adapted to selectively remove microplastics from the suctioned seawater, with said filtration system comprising at least one membrane filtration section configured for removal of microplastics by ultrafiltration (UF), nanofiltration (NF) and/or reverse osmosis or fibre filters, a turbine (26, 46) placed in communication with the suction duct (14, 40) and driven by the suctioned seawater, an energy generation circuit (28, 48) connected to the turbine (26, 46) and adapted to convert the mechanical energy of the turbine into electrical energy, an outlet mouth (25, 50) for the seawater filtered and/or used to drive the turbine.

2. The apparatus (10, 10') according to claim 1, **characterized in that** the inlet compartment (16, 42) for suction of seawater is openable/closable by means of a gate valve or the like (15, 44).

3. The apparatus (10, 10') according to claim 1 or 2, **characterized in that** the filtration system comprises a battery of filters or filtering membranes (18', 52) which comprises a pre-filtration section for removal of macroplastics and coarse particulate, a main filtration section comprising at least one membrane filtration configured for removal of microplastics of decreasing dimensions and a post-filtration section for removal of residual organic contaminants, possible settling tanks being arranged in correspondence with the battery of filters or filtering membranes (18', 52) for accumulation of non-filtered material.

4. The apparatus (10, 10') according to any one of the preceding claims, **characterized in that** the pre-filtration section comprises mesh or cartridge filters, the membrane filtration section comprises a sequence of ultrafiltration (UF), nanofiltration (NF) and/or reverse osmosis (RO) membranes or fibre filters and the post-filtration section comprises activated carbon filters.

5. The apparatus (10) according to the preceding claims, **characterized in that** the filtration system is arranged in a tank (18) connected with the suction duct (14) and with the discharge duct (20).

6. The apparatus (10) according to the preceding claims, **characterized in that** the turbine (26) is housed in a transit duct (22) with a rotation axis coaxial with the longitudinal axis of said transit duct (22), which is in communication with the suction duct (14) and which comprises a by-pass element (24) defined by a conveying net with the function of allowing the passage of only seawater inside said transit duct (22).

7. The apparatus (10') according to the preceding claims, **characterized in that** the suction duct (40) extends to define a first portion (40'), a second portion (40") and a third portion (40‴), the first portion (40') being in communication with seawater for a function of suction of seawater into said suction duct (40),
the second portion (40") extending starting from said first portion (40') and housing the turbine (46) with a rotation axis coaxial with the longitudinal axis of said second portion (40"), the third portion (40‴) extending starting from the second portion (40"), communicating with the outside of the vessel by means of the outlet mouth or compartment (50) and housing the filtration system.

8. The apparatus (10) according to claim 5, **characterized in that** it comprises a plastic-shredding device arranged at the inlet of the tank (18) and upstream of the battery of filters or filtering membranes (18') or internally to the suction duct (14) in correspondence with the gate valve (15).

9. The apparatus (10') according to claim 7, **characterized in that** it comprises a plastic-shredding device arranged at the inlet of the third portion (40‴) and upstream of the battery of filters or filtering membranes or internally to the first portion (40') of the suction duct (40) in correspondence with the gate valve (44).

10. The apparatus (10, 10') according to the preceding claims, **characterized in that** it comprises an impeller arranged in the suction duct (14, 40), activatable even with the watercraft stationary and defining a suction pump for collecting water and floating debris of the microplastics, light plastics debris and similar type, said impeller comprising a centrifugal or diaphragm pump, a collector filter and variable-mesh grilles and being arranged below the waterline of the watercraft.
